# EUROPÄISCHE PATENTSCHRIFT

(11) **EP 1 606 964 B1**
(45) Veröffentlichungstag und Bekanntmachung des Hinweises auf die Patenterteilung: **06.06.2007**
(21) Anmeldenummer: 04723163.4
(22) Anmeldetag: 25.03.2004
(51) Int. Cl.: H04Q 7/24, H04Q 7/32

(54) **GEBÜHRENABHÄNGIGES AKTIVIEREN UND DEAKTIVIEREN VON SIM-KARTEN IN EINEM MOBILFUNK-GATEWAY ODER MOBILFUNKENDGERÄT UND VERFAHREN DAFÜR**
ACTIVATION AND DEACTIVATION OF SIM CARDS IN A MOBILE RADIO GATEWAY OR MOBILE RADIO TERMINAL DEPENDING ON CHARGING CRITERIA AND CORRESPONDING METHOD
ACTIVATION ET DESACTIVATION DE CARTES SIM DANS UNE PASSERELLE OU UN APPAREIL DE TELEPHONIE MOBILE EN FONCTION DES TAXES ET PROCEDE ASSOCIE

(30) Priorität: 25.03.2003 DE 10314144
(43) Veröffentlichungstag der Anmeldung: 21.12.2005
(73) Patentinhaber: Teles AG Informationstechnologien, 10587 Berlin (DE)
(72) Erfinder: PAETSCH, Frank, 12357 Berlin (DE)
(74) Vertreter: Müller, Wolfram Hubertus
(86) Internationale Anmeldenummer: PCT/DE2004/000666
(87) Internationale Veröffentlichungsnummer: WO 2004/086788

(56) Entgegenhaltungen:
- EP-A- 0 830 042
- EP-A- 1 051 052
- WO-A-99/45730
- WO-A-99/46926
- GB-A- 2 267 794
- "Application Example: VT Multichannel System, Ingeration in a Carrier Network" VIERLING COMMUNICATIONS GMBH, Februar 2003 (2003-02), Seite 1, XP002293269

## Beschreibung

Die Erfindung betrifft ein Verfahren zum Bereitstellen von mit einer Kennung versehenen Einsteckkarten in einem Telekommunikationsgerät sowie ein Telekommunikationsgerät zur Durchführung eines solchen Verfahrens.

### Hintergrund der Erfindung

Es sind so genannte Mobilfunk-Gateways bekannt, die eine Schnittstelle zwischen dem Telekommunikations-Festnetz und Telekommunikations-Mobilfunknetzen bereitstellen. Ein Mobilfunk-Gateway wird von dem Nutzer eines Festnetz-Endgerätes angerufen und leitet die gewünschte Verbindung in das Mobilfunknetz weiter, in dem sich der gerufene Teilnehmer befindet. Hierzu implementiert das Mobilfunk-Gateway die Funktionalität eines Mobilfunktelefones und ruft gewissermaßen als Mobilfunktelefon den gerufenen Teilnehmer an.

Dabei ist vorgesehen, dass das Mobilfunk-Gateway eine Vielzahl von Einsteckkarten, insbesondere von so genannten SIM-Karten für die verwalteten Mobilfunkkanäle enthält. Eine SIM-Karte ist eine Einsteckkarte mit einer Kennung, über die ein Mobilfunkgerät einem bestimmten Netzbetreiber zugeordnet wird, eine bestimmte Rufnummer erhält und in allen Mobilfunknetzen eindeutig identifizierbar ist.

In der WO-A-99 45730 wird ein Mobiltelefon beschrieben, in dem mehrere SIM-Karten untergebracht werden können. Abhängig vom Zeitpunkt der Nutzung des Mobiltelefons wird automatisch die SIM-Karte aktiviert, die den günstigsten Tarif anbietet.

In der EP-A-1 051 052 wird ein Mobiltelefon beschrieben, das verschiedene Kartenlese-Einrichtungen enthält, die an eine Steuereinrichtung angeschlossen sind. Die Kartenlese-Einrichtungen können jeweils eine SIM-Karte aufnehmen. Somit kann der Nutzer des Mobiltelefons die abgehenden Rufe jeweils mit der kostengünstigsten Karte durchführen.

In der WO-A-99 46926 wird eine Pre-Paid-SIM-Karte (IPSC) für ein Mobiltelefon beschrieben, wobei die Gebührenberechnungen in der Pre-Paid-SIM-Karte und nicht in dem mobilen Netzwerk erfolgt. Der Restgeldbetrag wird auf der Pre-Paid-SIM-Karte überwacht und es wird bei Unterschreiten eines Grenzwertes gegebenenfalls ein akustisches Warnsignal erzeugt.

### Aufgabe der Erfindung

Der vorliegenden Erfindung liegt die Aufgabe zu Grunde, ein Verfahren zum Bereitstellen von mit einer Kennung versehenen Einsteckkarten in einem Telekommunikationsgerät zur Verfügung zu stellen, das sich durch eine effektive und kostengünstige Nutzung von Einsteckkarten und Gebührenmodellen auszeichnet. Des weiteren soll ein Telekommunikationsgerät bereitgestellt werden, das ein solches Verfahren realisiert.

### Zusammenfassung der Erfindung

Diese Aufgabe wird erfindungsgemäß durch ein Verfahren mit den Merkmalen des Anspruchs 1 und ein Telekommunikationsgerät mit den Merkmalen des Anspruchs 12 gelöst. Bevorzugte und vorteilhafte Ausgestaltungen der Erfindung sind in den Unteransprüchen angegeben.

Das erfindungsgemäße Verfahren sieht danach vor, dass einer Datenein-/ausgangseinrichtung des Telekommunikationsgeräts, die ausgehende Daten auf einen Nutzkanal des Telekommunikationsgeräts gibt und eingehende Daten empfängt (beispielsweise Sprachdaten), mindestens zwei Einsteckkarten oder eine Einsteckkarte mit mindestens zwei Abrechnungsmodi zugeordnet ist. Zunächst wird eine Einsteckkarte zur Nutzung mit der Datenein-/ausgangseinrichtung für einen betrachteten Nutzkanal aktiviert. Es wird nun geprüft, ob ein Steuersignal zum Wechseln der Einsteckkarte oder eines Abrechnungsmodus der Einsteckkarte vorliegt. Für diesen Fall erfolgt automatisch ein Deaktivieren der Einsteckkarte oder des aktuellen Abrechnungsmodus der Einsteckkarte. Gleichzeitig oder kurz danach erfolgt ein Bereitstellen und Aktivieren einer anderen Einsteckkarte zur Verwendung mit der Datenein-/ausgangseinrichtung oder eines anderen Abrechnungsmodus der Einsteckkarte. Erfindungsgemäß erfolgt eine Überwachung mindestens eines Parameters, der sich bei Nutzung des betrachteten Nutzkanals ändert. Bei Erreichen eines Grenzwertes des betrachteten Parameters wird ein Steuersignal zum Wechseln der Einsteckkarte oder eines Abrechnungsmodus der Einsteckkarte erzeugt.

Es wird also bei Erreichen eines Grenzwertes des Parameters die aktuelle Einsteckkarte oder der aktuelle Abrechnungsmodus deaktiviert und eine andere Einsteckkarte oder ein anderer Abrechnungsmodus aktiviert, wobei die neu aktivierte Einsteckkarte oder der neu aktivierte Abrechnungsmodus bevorzugt eine kostengünstigere Nutzung von Telekommunikationsdiensten erlaubt, als dies nach Erreichen des Grenzwerts des betrachteten Parameters mit der alten Einsteckkarte bzw. dem alten Abrechnungsmodus möglich gewesen wäre.

Die erfindungsgemäße Lösung beruht auf dem Gedanken, für einen Nutzkanal eines Telekommunikationsgeräts eine Vielzahl von Einsteckkarten und/oder Abrechnungsmodi für Kommunikationsdienste zu verwenden und dabei in einer Art und Weise einzusetzen, die eine besonders kostengünstige Nutzung des betrachteten Nutzkanals ermöglichen. Ein Wechsel erfolgt aufgrund eines Steuersignals, dass beispielsweise eine interne Steuereinrichtung oder ein Nutzer erzeugen.

Die vorliegende Erfindung erlaubt insbesondere eine optimale Ausnutzung von Gebührenmodellen, die in einzelnen Einsteckkarten realisiert sind. Spezielle Gebührenmodelle werden von Netzwerkbetreibern, insbesondere Mobilfunkbetreibern angeboten, um an einem Unterschreiten oder einem Überschreiten bestimmter Zeit- und/oder Geldkontingente zu verdienen.

Beispielsweise werden im Rahmen sogenannter Prepaid-Modelle bestimmte Guthaben für Telefondienste zu günstigen Preisen bereitgestellt. Ein Verdienst für den Anbieter ergibt sich bei dem Verfall eines nicht verbrauchten Guthabens. In einem anderen Beispiel werden Einsteckkarten angeboten, bei denen Kommunikationsdienste für einen bestimmten Zeitraum, etwa die ersten 1000 Minuten, zu einem günstigen Preis zur Verfügung stehen. Danach liegt ein wesentlich höherer Minutenpreis vor, an dem der Anbieter verdient. Die Zeit- und/oder Geldkontingente reduzieren sich bei jeder Nutzung eines Nutzkanals (Telefongespräch, Modem-Verbindung) fortlaufend.

Die erfindungsgemäße Lösung sieht nun vor, einen Wechsel der Einsteckkarte oder des Gebührenmodells derart vorzunehmen, so dass die Gebührenmodelle besondern effektiv genutzt werden können.

In einer bevorzugten Ausgestaltung wird als Parameter ein Zeitkontingent der Einsteckkarte überwacht und bei Erreichen eines Grenzwerts des Zeitkontigents automatisch eine andere Einsteckkarte für den betrachteten Kanal aktiviert. Der zu überwachende Grenzwert des Zeitkontingent ist dabei bevorzugt der Ablauf eines vorgegebenen Zeitraums, der durch eine bestimmte Kostenstruktur gekennzeichnet ist. Insbesondere werden während des vorgegebenen Zeitraums Telekommunikationsdienste, insbesondere Telefongespräche, besonders kostengünstig bereitgestellt. Die erfindungsgemäße Lösung ermöglicht es, solche Einsteckkarten ausschließlich während des Zeitraums einzusetzen, in dem eine billige Preisstruktur vorliegt. Danach wird automatisch auf eine andere Einsteckkarte gewechselt.

In einer anderen Ausgestaltung wird als Parameter ein Geldkontingent der Einsteckkarte überwacht und bei Erreichen eines Grenzwerts des Geldkontigents automatisch eine andere Einsteckkarte für den betrachteten Kanal aktiviert. Der Grenzwert des Geldkontingents ist dabei bevorzugt der Ablauf eines auf der Einsteckkarte vorgegebenen Geldguthabens. Dies ermöglicht es, ein vorhandenen Geldguthaben jeweils vollständig auszunutzen.

Bevorzugt erfolgt ein Wechsel der Einsteckkarte auch während einer bestehenden Verbindung zwischen einem rufenden Telekommunikationsgerät und einem gerufenen Telekommunikationsgerät, die den betrachteten Nutzkanal nutzt. Ggf. muss das Gespräch dabei kurzzeitig unterbrochen werden. Somit kann eine optimale Kostenstruktur auch dann beibehalten werden, wenn der Grenzwert eines betrachteten Parameters während eines Telefongesprächs oder einer anderen Telekommunikationsverbindung erreicht wird.

In einer weiteren bevorzugten Ausgestaltung besitzt die Einsteckkarte mehrere Abrechnungsmodi. Dies ist dahingehend zu verstehen, dass der Netzbetreiber, dem die Einsteckkarte zugeordnet ist, mehrere Gebührenmodelle bzw. Abrechnungsmodi für die Einsteckkarte bereitstellt, zwischen denen gewählt werden kann. Bei Vorliegen eines Grenzwertes eines betrachteten Parameters wird ein Steuersignal erzeugt und der Abrechnungsmodus der Einsteckkarte geändert. Das Steuersignal wird vom Telekommunikationsgerät erzeugt und im Rahmen von Signalisierungsinformationen an das Kommunikationsnetz des Netzbetreibers gesendet, dass daraufhin den anderen Abrechnungsmodus aktiviert. Anders als bei einem Wechseln der Einsteckkarte erfolgt der eigentliche Wechsel des Abrechnungsmodus somit im Netz.

Beispielsweise besitzt eine Einsteckkarte die Abrechungsmodi "Business" und "privat". Bei Erreichen des Grenzwerts eines betrachteten Parameters wird dann auf den anderen Abrechnungsmodus umgestellt, beispielsweise auf "privat", wenn bestimmte Zeit- und/oder Geldkontingente des Abrechungsmodus "Business" abgelaufen sind. Ein Wechseln des Abrechnungsmodus kann dabei ergänzend zu einem Wechsel der Einsteckkarte erfolgen. Beispielsweise wird erst auf einen anderen Abrechungsmodus und anschließend, wenn auch bei dem neuen Abrechungsmodus bestimmte Zeit- und/oder Geldkontingente abgelaufen sind, auf eine neue Einsteckkarte gewechselt.

Ein Wechseln des Abrechnungsmodus kann jedoch auch unabhängig von dem Erreichen von Grenzwerten veranlasst werden, insbesondere durch ein externes Steuersignal eines Nutzers, das etwa durch eine bestimmte Tastenkombinations des Telefons des Nutzers kodiert wird. Beispielsweise alktiviert ein Nutzer bei dem von seinem Arbeitgeber zur Verfügung gestellten Mobilfunkgerät vor dem Führen privater Gespräche des Abrechnungsmodus "Privat". Anschließend wechselt er wieder in den Abrechnungsmodus "Business". Ebenso kann ein Wechsel des Abrechnungsmodus durch ein Managementsytstem ausgelöst werden, dass beispielsweise ab einer bestimmte Uhrzeit auf einen anderen Abrechnungsmodus umstellt (etwa ab 18h von "Business" auf "Privat"). Der Wechsel des Abrechnungsmodus erfolgt bei Vorliegen eines entsprechenden Steuersignals, ohne dass ein Parameter überwacht würde, der sich bei Nutzen des betrachteten Nutzkanals ändert.

Der betrachtete Parameter wird bevorzugt durch eine Steuereinrichtung des Telekommunikationsgeräts überwacht, die bei Erreichen eines Grenzwerts des betrachteten Parameters ein internes Steuersignal erzeugt, durch dass dann automatisch ein Wechsel der Einsteckkarte bzw. ein Wechsel des Abrechnungsmodus veranlasst wird. Der Begriff Steuersignal ist dabei rein funktional zu verstehen. Jedes Signal, dass einen Wechsel der Einsteckkarte bzw. des Abrechnungsmodus veranlasst oder auslöst, ist als Steuersignal zu verstehen.

Der Grenzwert eines betrachteten Parameters ist in der Regel durch das in der Einsteckkarte implementierte Gebührenmodell bzw. auf der Einsteckkarte vorhandene Zeit- und/oder Geldkontingente vorgegeben, so dass der Grenzwert durch das Telekommunikationsgerät nur gelesen bzw. ausgewertet werden muss. Alternativ ist der Grenzwert durch einen Nutzer oder ein Managementsystem festlegbar.

Bei dem Telekommunikationsgerät handelt es sich bevorzugt um ein Mobilfunkgerät, insbesondere ein Mobilfunkgateway oder ein Mobilfunk-Endgerät. Die Datenein-/ausgangseinrichtung ist dann ein Funkmodul des Mobilfunkgeräts, über das Sprachdaten auf einem Mobilfunkkanal ausgestrahlt und empfangen werden.

Bei den Einststeckkarten handelt es sich bevorzugt um sogenannte SIM-Karten, die in Mobilfunknetzen eingesetzt werden. Eine SIM-Karte ist eine Einsteckkarte mit einer Kennung, über die ein Mobilfunkendgerät einem bestimmten Netzbetreiber zugeordnet ist, eine bestimmte Rufnummer erhält und in allen Mobilfunknetzen eindeutig identifizierbar ist. Darüber hinaus weist eine SIM-Karte eine PIN-Nummer (PIN - Personal Identity Number), sicherheitsrelevante Daten wie Kommunikationsschlüssel und Sicherheitsalgorithmen, nutzerspezifische Daten wie Kurzwahlnummern sowie netzspezifische Daten wie die Kennung des aktuellen Aufenthaltsbereiches auf. Eine SIM-Karte personalisiert ein Mobilfunkendgerät hinsichtlich des Nutzers und hinsichtlich des Netzbetreibers und ermöglicht die Abrechnung von Gesprächsgebühren von dem Netzbetreiber.

Es wird darauf hingeweisen, dass der Begriff Einsteckkarte im Sinne der vorliegenden Erfindung funktional zu verstehen ist. Zwar wird es sich in der Regel um eine tatsächliche Karte mit einem Chip handeln. Grundsätzlich kann die Funktionalität einer Einsteckkarte jedoch etwa auch durch Software bereitgestellt werden, die etwa über das Internet, über Funk oder eine CD auf das Telekommunikationsgerät geladen wird.

Ein erfindungsgemäßes Telekommunikationsgerät weist mindestens eine Datenein-/ausgangseinrichtung auf, die ausgehende Daten auf einen Nutzkanal des Telekommunikationsgeräts gibt und eingehende Daten empfängt. Der Datenein-/ausgangseinrichtung sind mindestens zwei Einsteckkarten oder eine Einsteckkarte mit mindestens zwei Abrechnungsmodi zugeordnet, durch die eine Zuordnung und Anmeldung des Telekommunikationsgeräts zu bzw. bei einem Kommunikationsnetz erfolgt. Das Telekommunikationsgerät besitzt Mittel zum Aktivieren einer Einsteckkarte zur Nutzung mit der Datenein-/ausgangseinrichtung, Mittel zum Prüfen, ob ein Steuersignal zum Wechseln der Einsteckkarte oder eines Abrechnungsmodus der Einsteckkarte vorliegt, Mittel zum automatischen Deaktivieren der Einsteckkarte oder eines Abrechnungsmodus der Einsteckkarte bei Vorliegen eines entsprechenden Steuersignals, und Mittel zum Bereitstellen und Aktivieren einer anderen Einsteckkarte zur Verwendung mit der Datenein-/ausgangseinrichtung oder eines anderen Abrechnungsmodus der Einsteckkarte.

Erfindungsgemäß weist das Telekommunikationsgerät des weiteren Mittel zum Überwachen mindestens eines Parameters, der sich bei Nutzung des Nutzkanals ändert, und Mittel zur Erzeugung eines Steuersignals zum Wechseln der Einsteckkarte oder eines Abrechnungsmodus der Einsteckkarte bei Erreichen eines Grenzwerts des betrachteten Parameters auf. Der Parameter wird somit intern im Telekommunikationsgerät überwacht und das Steuersignal wird ebenfalls vom Telekommunikationsgerät erzeugt.

Bei dem Telekommunikationsgerät handelt es sich bevorzugt um ein Mobilfunkgateway, das mit einem ersten Kommunikationsnetz verbindbar ist und das eine Gruppe von Nutzkanälen mindestens eines weiteren Kommunikationsnetzes verwaltet, wobei für jeden verwalteten Nutzkanal mindestens zwei Einsteckkarten bereitgestellt sind. Unter einem Gateway im Sinne der vorliegenden Erfindung wird jedes System verstanden wird, das an einem Netzwerkpunkt angeordnet ist, an dem ein Übergang bzw. ein Zugang zu einem anderen Kommunikationsnetz vorliegt. Unter einem Gateway wird insbesondere ein System verstanden, der an der Schnittstelle zwischen einem Telekommunikations-Festnetz und einem Telekommunikations-Mobilfunknetz angeordnet ist, und das aus dem Festnetz kommende Verbindungswünsche in das zugehörige Mobilfunknetz weiterleitet.

Dementsprechend ist das erste Kommunikationsnetz bevorzugt ein Telekommunikations-Festnetz und das mindestens eine weitere Kommunikationsnetz ein Telekommunikations-Mobilfunknetz. Die Datenein-/ausgangseinrichtung umfasst jeweils ein Funkmodul für eine Mobilfunk-Kommunikation. Die Einsteckkarten sind jeweils einem Mobilfunknetz zugeordnet. Für eine Datenein-/ausgangseinrichtung bzw. einen Mobilfunkkanal sind jeweils mindestens zwei Einsteckkarten oder eine Einsteckkarte mit mindestens zwei Abrechnungsmodi bereitgestellt. Bei Vorliegen eines Steuersignals wird für den betrachteten Mobilfunkkanal eine andere Einsteckkarte oder ein anderer Abrechnungsmodus aktiviert.

In einer alternativen Ausgestaltung ist das Telekommunikationsgerät ein Mobilfunk-Endgerät, dass für einen Nutzkanal bzw. eine Datenein-/ausgangseinrichtung mindestens zwei Einsteckkarten oder eine Einsteckkarte mit mindestens zwei Abrechnungsmodi bereithält, wobei die Mittel zum Aktivieren einer Einsteckkarte, die Mittel zum Prüfen, ob ein Steuersignal vorliegt, die Mittel zum automatisches Deaktivieren der Einsteckkarte oder eines Abrechnungsmodus und die Mittel zum Bereitstellen und Aktivieren einer anderen Einsteckkarte oder eines anderen Abrechnungsmodus in die Steuerung des Mobilfunk-Endgeräts integriert sind. Des weiteren sind bevorzugt die Mittel zum Überwachen mindestens eines Parameters und die Mittel zur Erzeugung eines Steuersignals in die Steuerung des Mobilfunk-Endgeräts integriert.

### Beschreibung mehrerer Ausführungsbeispiele

Die Erfindung wird nachfolgend unter Bezugnahme auf die Figuren der Zeichnung anhand mehrerer Ausführungsbeispiele näher erläutert. Es zeigen:
- Figur 1 -: eine Telekommunikationsanordnung mit einem Telekommmunikations-Festnetz und einem daran angeschlossenen Mobilfunk-Gateway;
- Figur 2 -: schematisch den Aufbau eines Mobilfunk-Gateways gemäß Figur 1;
- Figur 3 -: schematisch den Aufbau eines GSM-Boards eines Gateways gemäß Figur 2;
- Figur 4 -: die Ober- und Unterseite eines SIM-Karteneinschubs eines GSM-Boards gemäß Figur 3;
- Figur 5a -: schematisch ein funktionelles Blockschaltbild eines Mobilfunk-Gateways in einem ersten Zuordnungszustand;
- Figur 5b -: schematisch ein funktionelles Blockschaltbild eines Mobilfunk-Gateways in einem zweiten Zuordnungszustand und
- Figur 6 -: ein Ausführungsbeispiel eines Mobilfunkendgerätes mit einer Mehrzahl von Einsteckkarten.

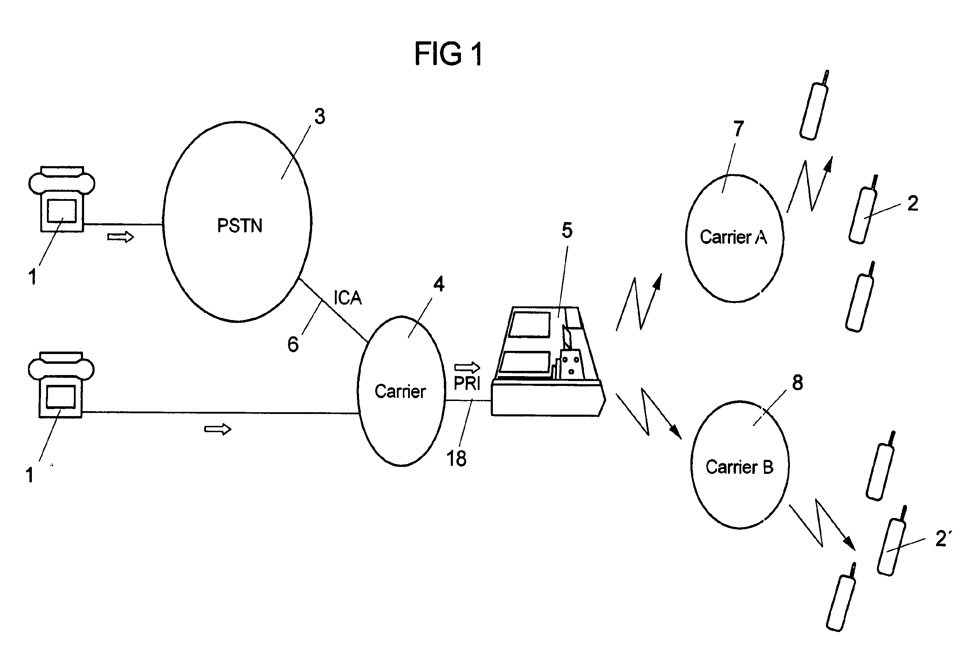

Die Figur 1 zeigt eine Telekommunikationsanordnung, die den Aufbau einer Verbindung zwischen einem rufenden Kommunikationsgerät 1, 1' eines ersten Kommunikationsnetzes und einem gerufenen Kommunikationsnetz 2, 2' eines weiteren Kommunikationsnetzes ermöglicht. Bei dem Kommunikationsgerät 1, 1' handelt es sich im dargestellten Ausführungsbeispiel um ein Telekommunikations-Endgerät (TK-Endgerät), beispielsweise ein Telefon oder einen Computer mit einer ISDN-Karte.

Ein TK-Endgerät 1, in Figur 1 beispielhaft als Telefon dargestellt, ist in an sich bekannter Weise über eine ortsvermittlungsstelle (nicht dargestellt) mit einem leitungsvermittelten Telekommunikationsnetz 3 (PSTN-Netz - public switched telephony network) verbunden ist. Bei dem Telekommunikationsnetz 3 handelt es sich insbesondere um das Netz des ehemaligen Monopolisten, in Deutschland die Deutsche Telekom AG. Das Telekommunikationsnetz 3 ist über einen so genannten Interconnect-Anschluss ICA 6 mit dem Telekommunikationsnetz 4 eines weiteren, alternativen Netzanbieters verbunden. Die Zusammenschaltung von Kommunikationsnetzen über Interconnect-Anschlüsse ist an sich bekannt, so dass hierauf nicht weiter eingegangen wird. Für die Zusammenschaltung hat der Betreiber des Netzes 4 eine Zusammenschaltungsgebühr (Interconnect-Gebühr) an den Betreiber des Netzes 3 zu zahlen. Alternativ ist ein Endgerät entsprechend dem unteren, in Figur 1 dargestellten Endgerät 1' direkt an das Netz 4 eines alternativen Netzanbieters angeschlossen.

An das Netz 4 ist des weiteren ein Mobilfunk-Gateway 5 angeschlossen. Die Anbindung des Mobilfunk-Gateways 5 an das Netz 4 erfolgt beispielsweise durch mindestens einen Primary-Rate-Interface (PRI) Anschluß 18 des diensteintegrierten Netzes ISDN, der 30 B-Datenkanäle und einen D-Signalisierungskanal bereitstellt (E1-Leitung). Ebenso können die Daten über andere Zugänge wie z.B. VoIP (Voice over IP) an das Mobilfunk-Gateway 5 gesandt werden. Des weiteren kann das Mobilfunk-Gateway 5 grundsätzlich auch direkt an das Netz 3 des ehemaligen Monopolisten angeschlossen sein.

Das Mobilfunkgateway 5 stellt einen Netzzugang zu einer Mehrzahl von Mobilfunknetzen 7, 8 bereit. Hierbei handelt es sich beispielsweise in Deutschland um die Netze D1, D2 und E-Plus. In Figur 1 sind beispielhaft zwei Netze 7, 8 dargestellt. Ein gerufenes Kommunikationsgerät eines solchen Mobilfunknetzes 7, 8 ist beispielsweise ein Mobilfunktelefon 2, 2', das über eine SIM-Karte individualisiert und dem entsprechenden Mobilfunknetz 7, 8 zugeordnet ist. Es kann somit über das jeweilige Mobilfunknetz 7, 8 eine Telekommunikationsverbindung zu einem Mobilfunktelefon 2, 2' aufgebaut werden kann.

Sofern nun ein Endgerät 1, 1' des Festnetzes 3, 4 eine Telekommunikationsverbindung, insbesondere eine Telefonverbindung zu einem Endgerät 2, 2' eines Mobilfunknetzes 7, 8 aufbauen will, wird der Verbindungswunsch über das Telekommunikationsnetz 3, 4, an das das rufende Endgerät 1, 1' angeschlossen ist, und ggf. unter Zwischenschaltung eines weiteren Telekommunikationsnetzes 4 an den Mobilfunk-Gateway 5 geleitet.

Wie nachfolgend noch erläutert, sind in das Mobilfunk-Gateway 5 eine Vielzahl von Mobilstationen integriert, die einen Zugang des Mobilfunk-Gateways 5 zu den einzelnen Mobilfunknetzen 7, 8 ermöglichen. Das Mobilfunk-Gateway 5 erkennt anhand der Vorwahlnummer des eingehenden Rufes das Mobilfunknetz, das dem gerufenen Endgerät 2, 2' zugeordnet ist. Zum Aufbau einer Verbindung zwischen dem rufenden Endgerät 1, 1' und dem gerufenen Endgerät 2, 2' stellt es einen Nutzkanal des entsprechenden Mobilfunknetzes 7, 8 bereit. Das Mobilfunkgateway 5 dient dabei selbst als Mobilfunkgerät und ruft über das Mobilfunknetz, in dem sich das gerufenen Endgerät 2, 2' befindet, dieses an.

Der Ruf wird dann in an sich bekannter Weise über eine Sende-Empfangsstation BTS (BTS - Base-Transceiver-Station), eine zugehörige Steuerungseinrichtung und weitere Netzinfrastruktur des Mobilfunknetzes 7, 8 an das gerufene Endgerät 2, 2' geleitet.

Alternativ wäre es auch möglich, eine Verbindung in ein Mobilfunknetz 7, 8 über einen Übergabepunkt des Telekommunikationsnetzes 3 bereitzustellen. Solche Übergabepunkte, die den Ruf dann in das Mobilfunknetz weiterleiten, sind an sich bekannt und finden auch Verwendung. Nachteilig sind auf diese Weise aufgebaute Telekommunikationsverbindungen jedoch mit hohen Gebühren verbunden, die der Betreiber des Telekommunikationsnetzes 3 für die Rufweiterleitung in das Mobilfunknetz erhebt, wobei gegebenenfalls zusätzlich Inerconnect-Gebühren hinzukommen. Eine gemäß Figur 1 aufgebaute Verbindung zwischen einem rufenden Endgerät 1, 1' im Festnetz und einem gerufenen Endgerät 2, 2' eines Mobilfunknetzes zeichnet sich dagegen durch eine wesentlich günstigere Preisstruktur aus, da die Mobilfunkverbindung zwischen dem Gateway 5 mit dem gerufenen Endgerät 2, 2' sowie die Festnetzverbindung zwischen dem rufenden Endgerät 1, 1' und dem Mobilfunkgateway 5 vergleichsweise kostengünstig sind. Statt der Kosten für einen Anruf von Festnetz zu Mobil fallen die Kosten eines Anrufs von Mobil zu Mobil plus geringen Zusatzkosten für die Festnetzverbindung an.

Natürlich kann über das Mobilfunkgateway 5 auch eine Verbindung von einem Mobilfunkendgerät 2, 2' zu einem Endgerät 1, 1' des Festnetzes oder eine Verbindung zwischen zwei Mobilfunkendgeräten 2, 2' hergestellt werden.

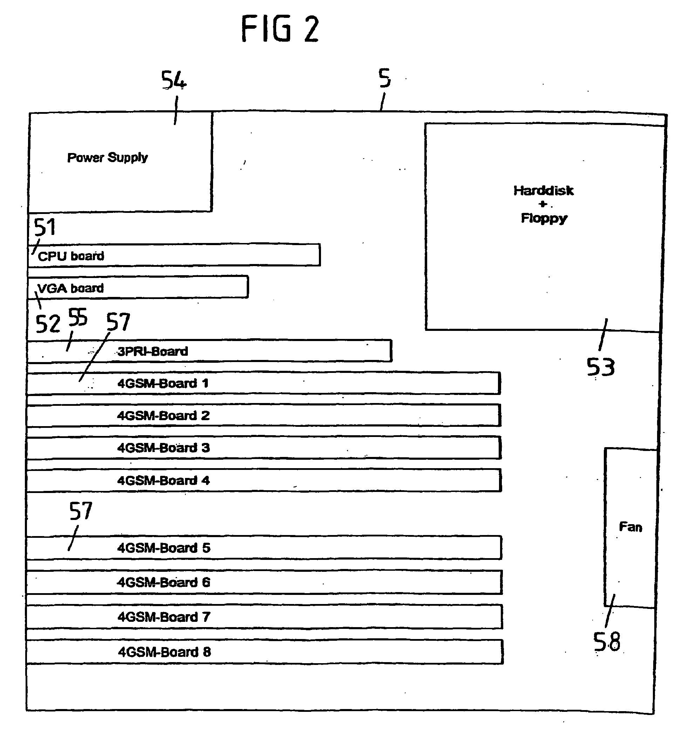

Die Figuren 2 bis 4 zeigen im Einzelnen den Aufbau eines Mobilfunk-Gateways 5. Gemäß Figur 2 weist das Mobilfunk-Gateway eine zentrale Prozessoreinheit 51, eine Grafikkarte 52, Harddisk- und Floppy-Laufwerke 53, eine Stromversorgung 54 und einen Ventilator 58 auf. Ein PRI-Board 55 stellt drei PRI (E1)-Verbindungen zum Festnetz bereit, wobei auch eine andere Zahl von E1-Verbindungen vorgesehen sein kann. Das PRI-Board 55 stellt ein Koppelfeld zur Verfügung, über das eingehende Verbindungen jeweils einem Ausgang bzw. Nutzkanal zum Mobilfunknetz zugeordnet werden. Alternativ wird das Koppelnetz durch eine entsprechende Software der zentralen Prozessoreinheit 51 bereitgestellt.

Des weiteren weist das Mobilfunk-Gateway 5 eine Vielzahl von GSM-Boards 57 für den Mobilfunk auf, die jeweils eine Vielzahl von Funkmodulen bereitstellen, im dargestellten Ausführungsbeispiel jeweils vier Funkmodule. Gemäß dem vorherrschenden Standard im Mobilfunkbereich handelt es sich um GSM-Funkmodule (GSM - Global System for Mobile Communication).

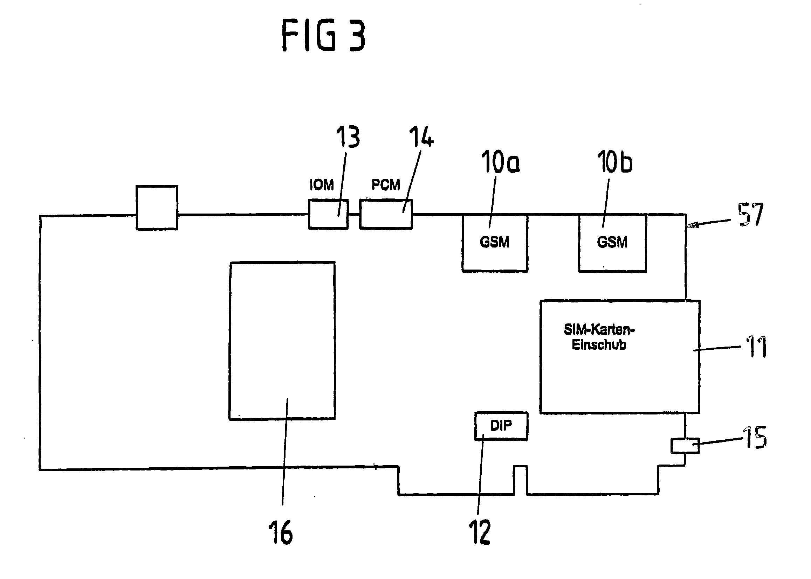

Ein GSM-Board 57 für den Mobilfunk ist in Figur 3 näher dargestellt. Das GSM-Board 57 weist auf der Vorder- und Rückseite jeweils zwei GSM-Module 10a, 10b auf, wobei die Figur 3 nur die auf der Oberseite dargestellten GSM-Module 10a, 10b zeigt. Jedes GSM-Modul 10a, 10b, das lediglich schematisch dargestellt ist, gibt Daten auf einen Mobilfunkkanal und empfängt über den Mobilfunkkanal Daten. Jedem GSM-Modul 10, 10b sind mehrere SIM-Karten zogeordnet, wobei zu einem bestimmten Zeitpunkt immer nur eine SIM-Karte aktiviert ist. Die SIM-Karten sind auf einem SIM-Karteneinschub 11 angeordnet. Ein GSM-Modul 10a, 10b und eine SIM-Karte bilden jeweils eine funktionelle Einheit. Beide sind notwendig zur Datenübertragung über einen Mobulfunkkanal.

Die Adresse des GSM-Boards 57 ist über ein DIP-Feld 12 einstellbar. Ein Anschluss an ein internes Koppelfeld des Gateways 5 erfolgt über einen PCM-Bus 14 oder einen IOM-Bus 13. Eine Antenne 15 zum Aussenden oder Empfang von Funksignalen wird an der Rückseite der Karte angeschraubt. Das GSM-Board 57 verfügt des weiteren bevorzugt über einen eigenständigen Prozessor 16 mit Betriebssystem, der die einzelnen Module steuert. Alternativ erfolgt eine Steuerung ausschließlich über die zentrale Prozessoreinheit 51.

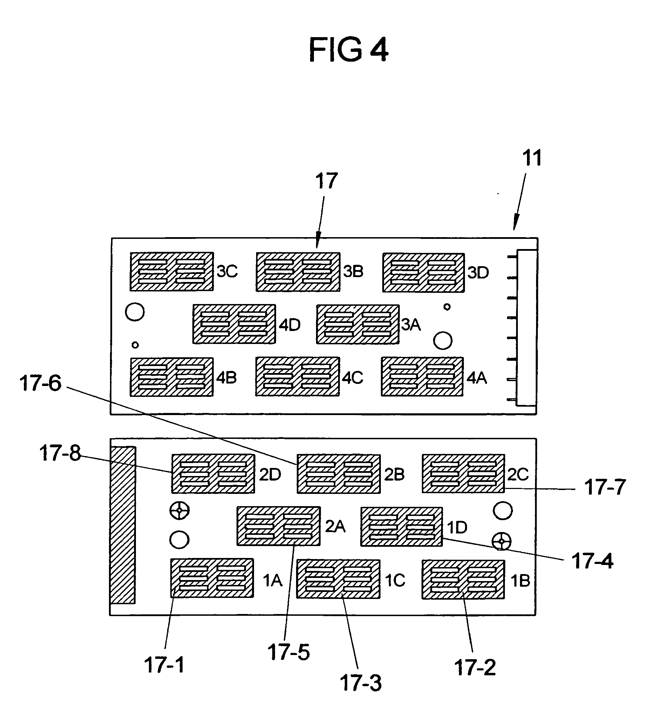

Figur 4 zeigt den SIM-Karteneinschub 11 der Figur 3 im Detail. Danach sind auf der Vorder- und Rückseite des Karteneinschubs 11 jeweils Aufnahmeplätze für acht SIM-Karten. 17 vorgesehen, so dass insgesamt sechzehn SIM-Karten 17 vorgehalten werden können. Jedem GSM-Modul 10a, 10b sind dabei maximal vier SIM-Karten 17 zuordbar. Beispielsweise sind mit dem einen GSM-Modul 10a vier SIM-Karten 17-1, 17-2, 17-3, 17-4, dem GSM-Modul 10b vier Einsteckkarten 17-5, 17-6, 17-7, 17-8, etc. zugeordnet. Allerdings müssen nicht alle Aufnahmeplätze belegt sein.

Es verhält sich nun so, dass für eine konkrete Verbindung in ein Mobilfunknetz 7, 8 jeweils nur eine SIM-Karte 17 eingesetzt werden kann. Für jede Mobilfunkverbindung bzw. jeden dazugehörigen Nutzkanal muss und kann daher eine Auswahl getroffen werden, welche der vier zu Verfügung stehenden SIM-Karten einer gewünschten Verbindung zugeordnet wird.

Die einem GSM-Modul zugeordneten SIM-Karten weisen bestimmte Gebührenmodelle auf, die sich durch bestimmte Zeit- und/oder Geldkontingente auszeichnen. Beispielsweise werden im Rahmen von Prepaid-Modellen bestimmte Guthaben für Telefondienste zu günstigen Preisen bereitgestellt. Ein Verdienst für den Anbieter ergibt sich bei dem Verfall eines nicht verbrauchten Guthabens. In einem anderen Beispiel werden Einsteckkarten angeboten, bei denen Kommunikationsdienste für einen bestimmten Zeitraum, etwa die ersten 1000 Minuten, zu einem günstigen Preis zur Verfügung stehen. Danach liegt ein wesentlich höherer Minutenpreis vor, an dem der Anbieter verdient. Die Zeit- und/oder Geldkontingente reduzieren sich bei jeder Nutzung eines Nutzkanals (Telefongespräch, Modem-Verbindung) fortlaufend.

Die einzelnen, für ein GSM-Modul 10a, 10b vorgehaltenen Einsteckkarten können demselben Kommunikationsnetz zugeordnet sein. Beispielsweise handelt es sich um mehrere SIM-Karten desselben Netzbetreibers, die jeweils Zeit- und/oder Geldkontingente mit günstiger Kostenstruktur aufweisen. Grundsätzlich können die vorgehaltenen SIM-Karten jedoch auch unterschiedlichen Netzbetreibern zugeordnet sein.

Es wird nun für eine aktivierte, d.h. einem GSM-Modul 10a, 10b aktuell zugeordnete SIM-Karte das verbrauchte Zeit- oder Geldkontingent überwacht. Dies erfolgt durch den eigenständigen Prozessor 16 des GSM-Board 57, die zentrale Prozessoreinheit 51 oder beide gemeinsam.

Insbesondere wird als Parameter der SIM-Karte ein Zeitkontingent und das Erreichen eines Grenzwerts des Zeitkontigents überwacht. Der zu überwachende Grenzwert des Zeitkontingent ist dabei der Ablauf eines vorgegenenen Zeitraums, der durch eine bestimmte Kostenstruktur gekennzeichnet ist. Alternativ wird als Parameter ein Geldkontingent der SIM-Karte und das Erreichen eines Grenzwerts des Geldkontingents überwacht. Der Grenzwert des Geldkontingents ist dabei der Ablauf eines auf der Einsteckkarte vorgegebenen Geldguthabens. Jede kostenpflichtige Verbindung führt zu einem Reduzieren des Zeit- bzw. Geldkontingents der aktivierten SIM-Karte und wird erfasst bzw. überwacht.

Bei Erreichen des Grenzwerts des Zeitkontigents bzw. Geldkontigents wird durch den Prozessor 16 des GSM-Boards 57 oder durch die zentrale Prozessoreinheit 51 ein Steuersignal erzeugt. Das Steuersignal bewirkt, dass automatisch eine andere Einsteckkarte für den betrachteten Kanal bzw. das GSM-Modul 10a, 10b aktiviert wird. Dabei wird automatisch die aktuell verwendete Einsteckkarte deaktiviert und eine andere Einsteckkarte bereitgestellt und aktiviert, die nun in Verbindung mit dem betrachteten GSM-Modul und Nutzkanal genutzt wird. Das Wechseln der SIM-Karte erfolgt dabei automatisch durch Steuerbefehle des Prozessor 16 der Einsteckkarte 57 oder der zentralen Prozessoreinheit 51 und eine geeignete Software.

Nach maximaler Nutzung der vorhandenen Zeit- oder Geldkontingente einer SIM-Karte wird somit automatisch auf eine andere SIM-Karte gewechselt, bei der noch Zeit- oder Geldkontingente vorhanden sind. Der Wechsel erfolgt automatisch, ggf. während einer bestehenden Verbindung, und ermöglicht eine optimale Nutzung vorhandenen zeit- oder Geldkontingente.

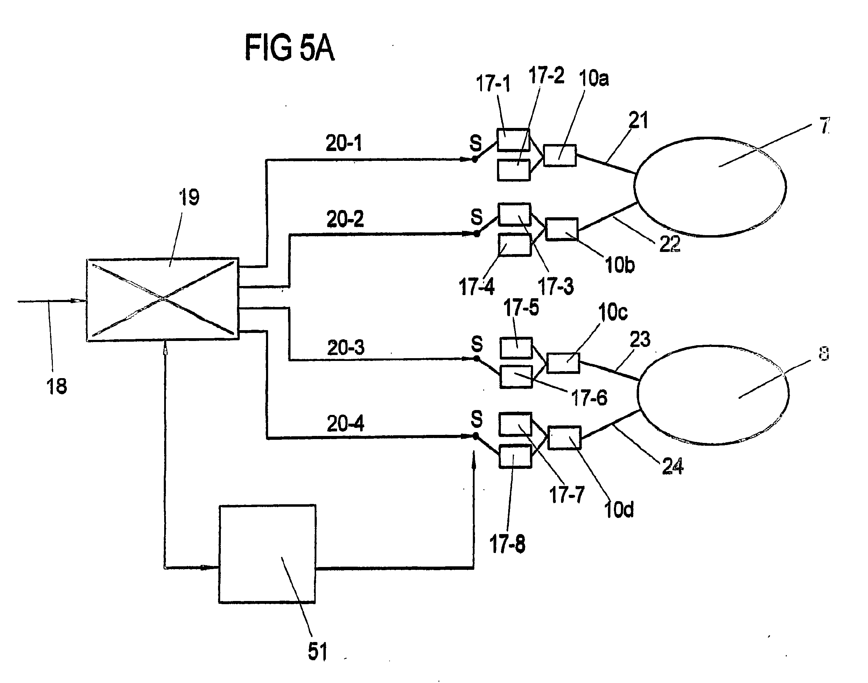

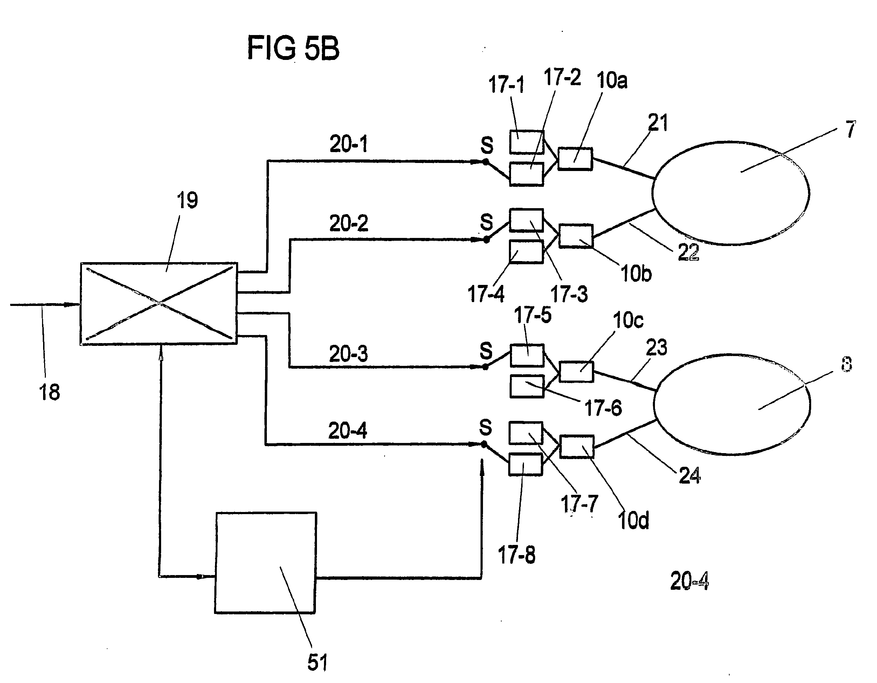

Dieser Vorgang wird ergänzend anhand der Figuren 5a und 5b erläutert. Figur 5a zeigt ein Koppelfeld 19, das beispielsweise in der Einsteckkarte 55 für eine PRI (E1)-Ankopplung gemäß Figur 2 implementiert ist. Das Koppelfeld 19 ist zum einen über einen PRI-Anschluß 18 gemäß Figur 1 an ein Festnetz angeschlossen. Die eingehenden, gemultiplexten Datenkanäle des PRI-Anschlusses 18 werden durch das Koppelnetz 19 auf eine Vielzahl von einzelnen Datenkanälen 20-1, 20-2, 20-3 und 20-4 verteilt. Dies wird über den zentralen Prozessor 51 des Gatesways 5 oder eine andere Steuereinheit gesteuert.

Zur einfacheren Darstellung sind in der Figur 5a nur vier GSM-Module 10a, 10b, 10c, 10d mit jeweils zwei SIM-Karten 17-1, 17-2, 17-3, 17-4, 17-5, 17-6, 17-7, 17-8 und zwei Mobilfunknetzen 7, 8 vorgesehen. Den Datenkanälen 20-1, 20-2, 20-3, 20-4 wird durch softwaregesteuerte Schalter S jeweils eine der SIM-Karten 17-1, 17-3, 17-6, 17-8 zugeordnet. Die Steuerung der Schalter S erfolgt mittels des zentralen Prozessors 51 oder einer anderen Steuereinheit. Über die GSM-Module 10a, 10b, 10c, 10d wird für jeden Datenkanal 20-1, 20-2, 20-3, 20-4 jeweils ein Nutzkanal 21, 22, 23, 24, für eine Mobilfunkübertragung bereitgestellt.

Die Zuordnung eines Nutzkanals 21, 22, 23, 24 zu einem Mobilfunknetz 7, 8 erfolgt über die gewählte SIM-Karte. Im Ausführungsbeispiel der Figur 5a sind für die beiden oberen Nutzkanäle 21, 22 die SIM-Karten 17-1, 17-3 ausgewählt, die dem Mobilfunknetz 7 zugeordnet sind. Für die beiden unteren Nutzkanäle 23, 24 sind die SIM-Karten 17-6, 17-8 ausgewählt, die dem Mobilfunknetz 8 zugeordnet sind. Die jeweils anderen SIM-Karten 17-2, 17-4, 17-5, 17-7 sind nicht aktiv geschaltet.

Die Prozessoreinheit 51 überwacht die Geld- und/oder Zeitkontingente der aktivierten SIM-Karten 17-1, 17-3, 17-6, 17-8. Bei Erreichen eines Grenzwerts des Geld- und/oder Zeitkontingents wird die aktuelle SIM-Karte durch Steuerung der Schalter S deaktiviert und die weitere, dem jeweiligen Nutzkanal bzw. GSM-Modul zugeordnete SIM-Karte aktiviert. Die deaktivierte Karte kann dann beispielsweise ausgetauscht werden.

Im Zustand gemäß Figur 5b wurde die SIM-Karte 17-1 deaktiviert und die SIM-Karte 17-2 aktiviert. Des weiteren wurde die SIM-Karte 17-6 deaktiviert und stattdessen die SIM-Karte 17-5 aktiviert. Die Steuerung erfolgt durch den zentralen Prozessor 51 des Gatesways 5 oder eine andere Steuereinheit.

Zurückkommend auf Figur 1 wird somit ein beispielsweise an ein Endgerät 2 des Netzes 7 gerichteter Ruf vom Mobilfunk-Gateway 5 an ein GSM-Modul 10a, 10b, 10c, 10d geleitet, das mit einer SIM-Karte 17 des entsprechenden Netzes 7 verbunden ist. Der Zentralprozessor 51 oder eine andere Steuereinheit des Mobilfunk-Gateways 5 überwachen ein Geld- und/oder Zeitkontingent der aktivierten SIM-Karte. Sobald dieses abgelaufen ist, wird automatisch auf eine andere SIM-Karte gewechselt.

In einem anderen Ausführungsbeispiel (nicht dargestellt) ist jedem GSM-Modul nur eine SIM-Karte zugeordnet. Die SIM-Karte erlaubt dabei jedoch eine Nutzung mit verschiedenen Gebührenmodelle bzw. Abrechnungsmodi. Entsprechend dem Vorgang beim Wechseln einer SIM-Karte bei Erreichen eines Grenzwerts eines Zeit- und/oder Geldkontingents erfolgt hier ein Wechsel des Abrechnungsmodus der Einsteckkarte. Ein solcher Wechsel kann bei Erreichen eines Grenzwerts, insbesondere dem Ablauf eines Zeit- und/oder Geldkontingents des aktuellen Abrechnungsmodus automatisch erfolgen. Alternativ oder ergänzend wird durch einen Nutzer oder ein externes Managementsystem ein entsprechendes Steuersignal erzeugt. Dies ermöglicht es einem Nutzer beispielsweise, nach Wunsch auf einen anderen Abrechnungsmodus umzustellen, etwa einen Abrechnungsmodus für den Feierabend oder das Wochenende. Das entsprechende Steuersignal wird beispielsweise durch eine bestimmte Tastenfolge seines Mobilfunktelefons erzeugt.

Sobald ein Steuersignal zum Wechseln des Abrechnungsmodus vorliegt, sendet das Gateway einen entsprechenden Signalisierungsbefehl an das zugehörige Mobilfunknetz. Eine Änderung des Abrechnungsmodus erfolgt dann netzseitig.

Eine Änderung des Abrechnungsmodus kann natürlich auch mit einem Wechsel der Einsteckkarte gemäß den Figuren 1 bis 5 kombiniert werden. Bei Erreichen bestimmter Grenzwerte von Zeit- und/oder Geldkontingenten kann z.B. zunächst ein Wechsel der Einsteckkarte und dann ein Wechsel des Abrechnungsmodus erfolgen oder umgekehrt.

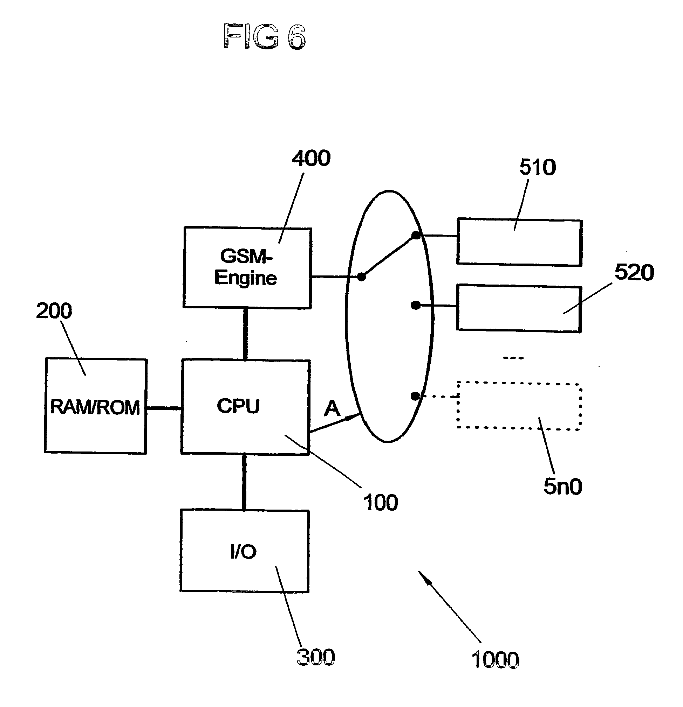

In einem weiteren Ausführungsbeispiel erfolgt ein Wechseln der SIM-Karte oder des Abrechnungsmodus einer SIM-Karte in einem Mobilfunkendgerät 1000. Die Figur 6 zeigt ein Blockschaltbild einer beispielhaften Ausgestaltung eines entsprechenden Mobilfunkendgerätes 1000. Das Mobilfunkendgerät 1000 weist eine zentrale Steuereinheit 100 mit einem zugeordneten Speicher 200, ein Eingabe/Ausgabe-Modul 300, ein Funkmodul 400 und eine Vielzahl von SIM-Karten-Leseeinrichtungen 510, 520 ... 5n0 auf. In den SIM-Karten-Leseeinrichtungen 510, 520, 5n0 ist jeweils eine SIM-Karte angeordnet, wobei nicht alle Leseeinrichtungen belegt sein müssen. Es sind mindestens zwei SIM-Karten-Leseeinrichtungen vorgesehen mit zwei SIM-Karten.

Bei dem Eingabe/Ausgabe-Modul 300 handelt es sich in an sich bekannter Weise um ein übliches Display, eine Tastatur oder Ähnliches. Die zentrale Steuereinheit 100 mit dem zugeordneten Speicher 200 steuert in ebenfalls an sich bekannter Weise die einzelnen Funktionen des Mobilfunkendgerätes. Sie ist dabei mit dem Funkmodul 400 verbunden, bei dem es sich gemäß dem vorherrschenden Standard im Mobilfunkbereich bevorzugt wiederum um ein GSM-Modul, auch als GSM-Engine bezeichnet, handelt. Das GSM-Modul 400 sendet und empfängt Daten auf einem Mobilfunkkanal.

Dem GSM-Modul 400 ist einer der SIM-Karten-Leseeinrichtungen 510, 520, 5n0 bzw. der darin eingesteckte SIM-Karte zugeordnet. Zu einem bestimmten Zeitpunkt ist somit immer nur eine SIM-Karte aktiviert. Das GSM-Modul 400 und eine SIM-Karte bilden eine funktionelle Einheit des Mobilfunkendgerätes aus. Beide sind notwendig zur Datenübertragung über einen Mobulfunkkanal.

Über die zentrale Steuereinheit 100 wird nun ein Zeit- und/oder Geldkontingent der aktuell aktivierten SIM-Karte überprüft. Bei Erreichen eines Grenzwerts wird durch die Steuereinheit 100 ein Steuersignal A erzeugt, dass zur Bereitstellung und Aktivierung einer anderen SIM-Karte führt. Dieses Bereitstellen und Aktivieren erfolgt ebenfalls durch die Steuereinheit 100. Der Vorgang entspricht dem entsprechenden Vorgang beim Möbilfunkgateway der Figuren 2 bis 5, so dass auf die diesbezüglichen Ausführungen verwiesen wird.

Statt mit mehreren SIM-Karten oder zusätzlich kann das Verfahren wiederum auch mit mehreren Abrechnungsmodi einer SIM-Karte durchgeführt werden. Bei Vorliegen eines Steuersignals zum Wechsel des Abrechnungsmodus, dass beispielsweise durch einen Nutzer oder durch interne Überwachung eines Grenzwerts des Zeit- und/oder Geldkontingent der aktuell aktivierten SIM-Karte erzeugt wird, gibt die Steuereinheit 100 an Steuersignal an das zugehörige Kommunikationsnetz aus, dass der Abrechnungsmodus der SIM-Karte geändert werden soll. Dieses Steuersignal wird über das GSM-Modul 400 ausgesandt.

## Patentansprüche

1. Verfahren zum Bereitstellen von mit einer Kennung versehenen Einsteckkarten (17-1, 17-2, ...; 17-8; 510, 520 ... 5n0) in einem Telekommunikationsgerät (5, 1000), wobei durch eine Einsteckkarte eine Zuordnung und Anmeldung des Telekommunikationsgeräts zu bzw. bei einem Kommunikationsnetz erfolgt, und wobei einer Datenein-/ausgangseinrichtung (10a, 10b; 400) des Telekommunikationsgeräts (5, 1000), die ausgehende Daten auf einen Nutzkanal des Telekommunikationsgeräts gibt und eingehende Daten empfängt, mindestens zwei Einsteckkarten oder eine Einsteckkarte mit mindestens zwei Abrechnungsmodi zugeordnet ist, mit den Schritten:
- Aktivieren einer Einsteckkarte zur Nutzung mit der Datenein-/ausgangseinrichtung (10a, 10b; 400),
- Prüfen, ob ein Steuersignal zum Wechseln der Einsteckkarte oder eines Abrechnungsmodus der Einsteckkarte vorliegt,
- automatisches Deaktivieren der Einsteckkarte oder eines Abrechnungsmodus der Einsteckkarte bei Vorliegen eines entsprechenden Steuersignals,
Bereitstellen und automatisches Aktivieren einer anderen Einsteckkarte zur Nutzung mit der Datenein-/ausgangseinrichtung (10a, 10b; 400) oder eines anderen Abrechnungsmodus der Einsteckkarte
**gekennzeichnet durch**
- eine Überwachung mindestens eines Parameters, der sich bei Nutzung des Nutzkanals ändert, wobei bei Erreichen eine Grenzwertes des betrachteten Parameters automatisch das Steuersignal zum Wechseln der Einsteckkarte oder zum Wechseln eines Abrechnungsmodus der Einsteckkarte erzeugt wird.

2. Verfahren nach Anspruch 1, **dadurch gekennzeichnet, dass** als Parameter ein Zeitkontingent der Einsteckkarte überwacht und bei Erreichen eines Grenzwerts des Zeitkontigents automatisch eine andere Einsteckkarte für den betrachteten Nutzkanal aktiviert wird.

3. Verfahren nach Anspruch 2, **dadurch gekennzeichnet, dass** der Grenzwert des Zeitkontingent der Ablauf eines vorgegebenen Zeitraums ist, der durch eine bestimmte Kostenstruktur **gekennzeichnet** ist.

4. Verfahren nach Anspruch 1 oder 2, **dadurch gekennzeichnet, dass** als Parameter ein Geldkontingent der Einsteckkarte überwacht und bei Erreichen eines Grenzwerts des Geldkontigents automatisch eine andere Einsteckkarte für den betrachteten Nutzkanal aktiviert wird.

5. Verfahren nach Anspruch 4, **dadurch gekennzeichnet, dass** der Grenzwert des Geldkontingents der Ablauf eines auf der Einsteckkarte vorgegebenen Geldguthabens ist.

6. Verfahren nach mindestens einem der vorangehenden Ansprüche, **dadurch gekennzeichnet, dass** ein Wechsel der Einsteckkarte auch während einer bestehenden Verbindung zwischen einem rufenden Telekommunikationsgerät und einem gerufenen Telekommunikationsgerät erfolgt.

7. Verfahren nach Anspruch 2, **dadurch gekennzeichnet, dass** die Einsteckkarte mehrere Abrechnungsmodi besitzt und bei Vorliegen eines Grenzwertes eines betrachteten Parameters ein Steuersignal erzeugt und der Abrechnungsmodus der Einsteckkarte geändert wird.

8. Verfahren nach mindestens einem der vorangegangenen Ansprüche, **dadurch gekennzeichnet, dass** der Parameter durch eine Steuereinrichtung (51, 100) des Telekommunikationsgeräts (5, 1000) überwacht wird und bei Erreichen des Grenz-werts eines betrachteten Parameters die Steuereinrichtung ein internes Steuersignal erzeugt.

9. Verfahren nach Anspruch 1, **dadurch gekennzeichnet, dass** die Einsteckkarte mehrere Abrechnungsmodi besitzt und aufgrund eines externen Steuersignals der Abrechnungsmodus der Einsteckkarte geändert wird.

10. Verfahren nach Anspruch 9, **dadurch gekennzeichnet, dass** das externe Steuersignal durch ein Managementsystem ausgelöst wird.

11. Verfahren nach mindestens einem der vorangehenden Ansprüche, **dadurch gekennzeichnet, dass** das Telekommunikationsgerät ein Mobilfunkgerät ist, insbesondere ein Mobilfunkgateway (5) oder ein Mobilfunk-Endgerät (1000), und die Datenein-/ausgangseinrichtung ein Funkmodul (10a, 10b; 400) des Mobilfunkgeräts, dem jeweils mindestens zwei Einsteckkarten oder eine Einsteckkarte mit mindestens zwei Abrechungsmodi zugeordnet ist.

12. Telekommunikationsgerät zur Durchführung des Verfahrens gemäß Anspruch 1, wobei das Telekommunikationsgerät mindestens eine Datenein-/ausgangseinrichtung (10a, 10b; 400) aufweist, die ausgehende Daten auf einen Nutzkanal des Telekommunikationsgeräts gibt und eingehende Daten empfängt, und der Datenein-/ausgangseinrichtung mindestens zwei Einsteckkarten (17-1, 17-2, ...; 17-8; 510, 520 ... 5n0) oder eine Einsteckkarte mit mindestens zwei Abrechnungsmodi zugeordnet ist, aufweisend:
- Mittel (51, 100) zum Aktivieren einer Einsteckkarte (17-1, 17-2, ...; 17-8; 510, 520 ... 5n0) zur Nutzung mit der Datenein-/ausgangseinrichtung (10a, 10b, 400),
- Mittel (51, 100) zum Prüfen, ob ein Steuersignal zum Wechseln der Einsteckkarte (17-1, 17-2, ...; 17-8; 510, 520 ... 5n0) oder eines Abrechnungsmodus der Einsteckkarte vorliegt,
- Mittel (51, 100) zum automatischen Deaktivieren der Einsteckkarte (17-1, 17-2, ...; 17-8; 510, 520 ... 5n0) oder eines Abrechnungsmodus der Einsteckkarte bei Vorliegen eines entsprechenden Steuersignals,
- Mittel (51, 100) zum Bereitstellen und automatischen Aktivieren einer anderen Einsteckkarte (17-1, 17-2, ... ; 17-8; 510, 520 ... 5n0) zur Verwendung mit der Datenein-/ausgangseinrichtung (10a, 10b, 400) oder eines anderen Abrechnungsmodus der Einsteckkarte,
**gekennzeichnet durch**
- Mittel (51, 400) zum Überwachen mindestens eines Parameters, der sich bei Nutzung des Nutzkanals ändert, und
- Mittel (51, 400) zur Erzeugung eines Steuersignals zum Wechseln der Einsteckkarte oder eines Abrechnungsmodus der Einsteckkarte bei Erreichen eines Grenzwerts des betrachteten Parameters.

13. Telekommunikationsgerät nach Anspruch 12, **dadurch gekennzeichnet, dass** das Telekommunikationsgerät ein Mobilfunkgateway (5) ist; das mit einem ersten Kommunikationsnetz (3, 4) verbindbar ist und das eine Gruppe von Nutzkanälen (21, 22) mindestens eines weiteren Kommunikationsnetzes (7, 8) verwaltet, wobei für jeden verwalteten Nutzkanal mindestens zwei Einsteckkarten oder eine Einsteckkarte mit mindestens zwei Abrechnungsmodi bereitgestellt ist.

14. Telekommunikationsgerät nach Anspruch 13, **dadurch gekennzeichnet, dass** das erste Kommunikationsnetz ein Telekommunikations-Festnetz (3, 4) und die weiteren Kommunikationsnetze Telekommunikations-Mobilfunknetze (7, 8) sind, wobei
- eine Datenein-/ausgangseinrichtung jeweils ein Funkmodul (10a-10d) für eine Mobilfunk-Kommunikation umfasst,
- die Einsteckkarten (17-1, 17-2, ...; 17-8 jeweils einem Mobilfunknetz (7, 8) zugeordnet sind und
- für eine Datenein-/ausgangseinrichtung (10a-10d) bzw. einen Mobilfunkkanal mindestens zwei Einsteckkarten bereitgestellt sind.

15. Telekommunikationsgerät nach Anspruch 12 , **dadurch gekennzeichnet, dass** das Telekommunikationsgerät ein Mobilfunk-Endgerät (1000) ist, dass für einen Nutzkanal bzw. eine Datenein-/ausgangseinrichtung (400) mindestens zwei Einsteckkarten oder eine Einsteckkarte mit mindestens zwei Abrechnungsmodi bereithält, wobei die Mittel zum Aktivieren einer Einsteckkarte, die Mittel zum Prüfen, ob ein Steuersignal vorliegt, die Mittel zum automatisches Deaktivieren der Einsteckkarte oder eines Abrechnungsmodus und die Mittel zum Bereitstellen und Aktivieren einer anderen Einsteckkarte oder eines anderen Abrechnungsmodus in die Steuerung (100) des Mobilfunk-Endgeräts (1000) integriert sind.

16. Telekommunikationsgerät nach Anspruch 12 und 15, **dadurch gekennzeichnet, dass** des weiteren die Mittel zum Überwachen mindestens eines Parameters und die Mittel zur Erzeugung eines Steuersignals in die Steuerung (100) des Mobilfunk-Endgeräts (1000) integriert sind.

## Claims

1. Method for providing plug-in cards (17-1, 17-2, ...; 17-8; 510, 520 ... 5n0) provided with an identification in a telecommunications device (5, 1000), wherein an assignment and registration of the telecommunications device to or in a communications network are realised through a plug-in card, and wherein at least two plug-in cards or one plug-in card with at least two charging modes is / are assigned to a data input / output device (10a, 10b; 400) of the telecommunications device (5, 1000) which sends outgoing data to a payload channel of the telecommunications device and receives incoming data, with the steps:
- activation of a plug-in card for use with the data input / output device (10a, 10b; 400),
- checking whether a control signal is present for changing the plug-in card or a charging mode of the plug-in card,
- automatic deactivation of the plug-in card or of a charging mode of the plug-in card in the presence of a corresponding control signal,
- provision and automatic activation of another plug-in card for use with the data input / output device (10a, 10b; 400) or of another charging mode of the plug-in card,
**characterised by**
- monitoring of at least one parameter which changes during use of the payload channel, whereby upon reaching of a threshold value of the considered parameter the control signal for changing the plug-in card or for changing a charging mode of the plug-in card is automatically generated.

2. Method according to claim 1, **characterised in that** a time contingent of the plug-in card is monitored as a parameter and upon reaching of a threshold value of the time contingent another plug-in card is automatically activated for the considered payload channel.

3. Method according to claim 2, **characterised in that** the threshold value of the time contingent is the expiry of a predefined time period which is **characterised by** a certain cost structure.

4. Method according to claim 1 or 2, **characterised in that** a money contingent of the plug-in card is monitored as a parameter and upon reaching of a threshold value of the money contingent another plug-in card is automatically activated for the considered payload channel.

5. Method according to claim 4, **characterised in that** the threshold value of the money contingent is the expiry of a money credit predefined on the plug-in card.

6. Method according to at least one of the preceding claims, **characterised in that** a change of the plug-in card also takes place during an existing connection between a calling telecommunications device and a called telecommunications device.

7. Method according to claim 2, **characterised in that** the plug-in card has a plurality of charging modes and, in the presence of a threshold value of a considered parameter, a control signal is generated and the charging mode of the plug-in card is changed.

8. Method according to at least one of the preceding claims, **characterised in that** the parameter is monitored by a control device (51, 100) of the telecommunications device (5, 1000) and upon reaching of a threshold value of a considered parameter the control device generates an internal control signal.

9. Method according to claim 1, **characterised in that** the plug-in card has a plurality of charging modes and the charging mode of the plug-in card is changed on account of an external control signal.

10. Method according to claim 9, **characterised in that** the external control signal is triggered by a management system.

11. Method according to at least one of the preceding claims, **characterised in that** the telecommunications device is a mobile radio device, particularly a mobile radio gateway (5) or a mobile radio terminal (1000), and the data input / output device is a radio module (10a, 10b; 400) of the mobile radio device, to which at least two plug-in cards or one plug-in card with at least two charging modes is / are assigned.

12. Telecommunications device for implementing the method according to claim 1, wherein the telecommunications device comprises at least one data input / output device (10a, 10b; 400) which sends outgoing data to a payload channel of the telecommunications device and receives incoming data, and at least two plug-in cards (17-1, 17-2, ...; 17-8; 510, 520 ... 5n0) or one plug-in card with at least two charging modes is / are assigned to the data input / output device, comprising:
- means (51, 100) for activating a plug-in card (17-1, 17-2, ...; 17-8; 510, 520 ... 5n0) for use with the data input / output device (10a, 10b, 400),
- means (51, 100) for checking whether a control signal for changing the plug-in card (17-1, 17-2, ...; 17-8; 510, 520 ... 5n0) or a charging mode of the plug-in card is present,
- means (51, 100) for automatic deactivation of the plug-in card (17-1, 17-2, ...; 17-8; 510, 520 ... 5n0) or of a charging mode of the plug-in card in the presence of a corresponding control signal,
- means (51, 100) for the provision and automatic activation of another plug-in card (17-1, 17-2, ...; 17-8; 510, 520 ... 5n0) for use with the data input / output device (10a, 10b, 400) or of another charging mode of the plug-in card,
**characterised by**
- means (51, 400) for monitoring at least one parameter which changes during use of the payload channel, and
- means (51, 400) for generating a control signal for changing the plug-in card or a charging mode of the plug-in card upon reaching of a threshold value of the considered parameter.

13. Telecommunications network according to claim 12, **characterised in that** the telecommunications device is a mobile radio gateway (5) which is adapted to be connected to a first communications network (3, 4) and which manages a group of payload channels (21, 22) of at least one further communications network (7, 8), whereby at least two plug-in cards or one plug-in card with at least two charging modes is / are provided for each payload channel managed.

14. Telecommunications device according to claim 13, **characterised in that** the first communications network is a fixed telecommunications network (3, 4) and the further communications networks are mobile radio telecommunications networks (7, 8), whereby
- a data input / output device includes a respective radio module (10a - 10d) for a mobile radio communication,
- the plug-in cards (17-1, 17-2, ...; 17-8 are each assigned to a mobile radio network (7, 8), and
- at least two plug-in cards are provided for a data input / output device (10a - 10d) or a mobile radio channel.

15. Telecommunications device according to claim 12, **characterised in that** the telecommunications device is a mobile radio terminal (1000) that keeps ready at least two plug-in cards or one plug-in card with at least two charging modes for a payload channel or a data input / output device (400), whereby the means for activating a plug-in card, the means for checking whether a control signal is present, the means for automatic deactivation of the plug-in card or of a charging mode and the means for providing and activating another plug-in card or another charging mode are integrated into the control (100) of the mobile radio terminal (1000).

16. Telecommunications device according to claim 12 and 15, **characterised in that** furthermore the means for monitoring at least one parameter and the means for generating a control signal are integrated into the control (100) of the mobile radio terminal (1000).

## Revendications

1. Procédé pour préparer des cartes enfichables (17-1, 17-2, ... ; 17-8 ; 510, 520... 5n0) pourvues d'une identification dans un appareil de télécommunications (5, 1000), une attribution et une inscription de l'appareil de télécommunications à ou auprès d'un réseau de communications s'effectuant par l'intermédiaire d'une carte enfichable, et au moins deux cartes enfichables ou une carte enfichable avec au moins deux modes de facturation étant attribuées à un dispositif d'entrée / sortie de données (10a, 10b; 400) de l'appareil de télécommunications (5, 1000), lequel transmet les données sortantes à un canal utile de l'appareil de télécommunications et reçoit les données entrantes, avec les étapes consistant à :
- activer une carte enfichable pour l'utilisation avec le dispositif d'entrée / sortie de données (10a, 10b ; 400),
- vérifier s'il existe un signal de commande pour changer la carte enfichable ou un mode de facturation de la carte enfichable,
- désactiver automatiquement la carte enfichable ou un mode de facturation de la carte enfichable lorsqu'un signal de commande correspondant existe, préparer et activer automatiquement une autre carte enfichable pour l'utilisation avec le dispositif d'entrée / sortie de données (10a, 10b; 400), ou un autre mode de facturation de la carte enfichable, **caractérisé par**
- un contrôle au moins d'un paramètre qui change en cas d'utilisation du canal utile, le signal de commande pour changer la carte enfichable ou pour changer un mode de facturation de la carte enfichable étant automatiquement généré lorsqu'une valeur limite du paramètre considéré est atteinte.

2. Procédé selon la revendication 1, **caractérisé en ce qu'**un contingent de temps de la carte enfichable est contrôlé en tant que paramètre et lorsqu'une valeur limite du contingent de temps est atteinte, une autre carte enfichable est automatiquement activée pour le canal utile considéré.

3. Procédé selon la revendication 2, **caractérisé en ce que** la valeur limite du contingent de temps correspond à l'expiration d'une période de temps prédéterminée, qui est **caractérisée par** une structure de coûts déterminée.

4. Procédé selon la revendication 1 ou 2, **caractérisé en ce qu'**un contingent d'argent de la carte enfichable est contrôlé en tant que paramètre et lorsqu'une valeur limite du contingent d'argent est atteinte, une autre carte enfichable est automatiquement activée pour le canal utile considéré.

5. Procédé selon la revendication 4, **caractérisé en ce que** la valeur limite du contingent d'argent correspond à l'expiration d'un avoir d'argent prédéterminé sur la carte enfichable.

6. Procédé selon au moins l'une quelconque des revendications précédentes, **caractérisé en ce qu'**un changement de la carte enfichable s'effectue même pendant une connexion établie entre un appareil de télécommunications appelant et un appareil de télécommunications appelé.

7. Procédé selon la revendication 2, **caractérisé en ce que** la carte enfichable possède plusieurs modes de facturation et en présence d'une valeur limite d'un paramètre considéré un signal de commande est généré et le mode de facturation de la carte enfichable est modifié.

8. Procédé selon au moins l'une quelconque des revendications précédentes, **caractérisé en ce que** le paramètre est contrôlé par un dispositif de commande (51, 100) de l'appareil de télécommunications (5, 1000) et lorsque la valeur limite d'un paramètre considéré est atteinte, le dispositif de commande génère un signal de commande interne.

9. Procédé selon la revendication 1, **caractérisé en ce que** la carte enfichable possède plusieurs modes de facturation et le mode de facturation de la carte enfichable change en raison d'un signal de commande externe.

10. Procédé selon la revendication 9, **caractérisé en ce que** le signal de commande externe est déclenché par un système de gestion.

11. Procédé selon au moins l'une quelconque des revendications précédentes, **caractérisé en ce que** l'appareil de télécommunications est un appareil de téléphonie mobile, en particulier une passerelle de téléphonie mobile (5) ou un terminal de téléphonie mobile (1000), et le dispositif d'entrée / de sortie de données est un module radio (10a, 10b ; 400) de l'appareil de téléphonie mobile, auquel sont respectivement attribuées au moins deux cartes enfichables ou une carte enfichable avec au moins deux modes de facturation.

12. Appareil de télécommunications pour mettre en oeuvre le procédé selon la revendication 1, l'appareil de télécommunications comportant au moins un dispositif d'entrée / sortie de données (10a, 10b ; 400) qui transmet des données sortantes à un canal utile de l'appareil de télécommunications et reçoit des données entrantes, et au moins deux cartes enfichables (17-1, 17-2, ... ; 17-8 ; 510, 520 ...5n0) ou une carte enfichable avec au moins deux modes de facturation étant attribuées au dispositif d'entrée / sortie de données, ledit appareil comportant :
- des moyens (51, 100) pour activer une carte enfichable (17-1, 17-2, ... ; 17-8 ; 510, 520 ... 5n0) pour l'utilisation avec le dispositif d'entrée / sortie de données (10a, 10b; 400),
- des moyens (51, 100) pour vérifier s'il existe un signal de commande pour changer la carte enfichable ((17-1, 17-2, ... ; 17-8 ; 510, 520 ...5n0) ou un mode de facturation de la carte enfichable,
- des moyens (51, 100) pour désactiver automatiquement la carte enfichable (17-1, 17-2, ... ; 17-8 ; 510, 520 ... 5n0) ou un mode de facturation de la carte enfichable lorsqu'un signal de commande correspondant existe,
- des moyens (51, 100) pour préparer et activer automatiquement une autre carte enfichable (17-1, 17-2, ... ; 17-8 ; 510, 520 ...5n0) pour l'utilisation avec le dispositif d'entrée / sortie de données (10a, 10b ; 400), ou un autre mode de facturation de la carte enfichable, **caractérisé par**
- des moyens (51, 400) pour contrôler au moins un paramètre qui change en cas d'utilisation du canal utile et
- des moyens (51, 400) pour générer un signal de commande pour changer la carte enfichable ou un mode de facturation de la carte enfichable lorsqu'une valeur limite du paramètre considéré est atteinte.

13. Appareil de télécommunications selon la revendication 12, **caractérisé en ce que** l'appareil de télécommunications est une passerelle de téléphonie mobile (5) qui peut être reliée à un premier réseau de communications (3, 4) et qui gère un groupe de canaux utiles (21, 22) au moins d'un autre réseau de communications (7, 8), au moins deux cartes enfichables ou une carte enfichable avec au moins deux modes de facturation étant préparées pour chaque canal utile géré.

14. Appareil de télécommunications selon la revendication 13, **caractérisé en ce que** le premier réseau de télécommunication est un réseau fixe de télécommunications (3, 4) et les autres réseaux de télécommunication sont des réseaux de télécommunications de téléphonie mobile (7, 8),
- un dispositif d'entrée / sortie de données comprenant respectivement un module radio (10a-10d) pour une communication de téléphonie mobile,
- les cartes enfichables (17-1, 17-2, ... ; 17-8) étant respectivement attribuées à un réseau de téléphonie mobile (7, 8) et
- au moins deux cartes enfichables étant préparées pour un dispositif d'entrée / sortie de données (10a-10d) et/ou pour un canal de téléphonie mobile.

15. Appareil de télécommunications selon la revendication 12, **caractérisé en ce que** l'appareil de télécommunications est un terminal de téléphonie mobile (1000), qui tient au moins deux cartes enfichables ou une carte enfichable avec au moins deux modes de facturation à la disposition d'un canal utile d'un dispositif d'entrée / de sortie de données (400), respectivement les moyens pour activer une carte enfichable, les moyens pour vérifier l'existence d'un signal de commande, les moyens pour désactiver automatiquement la carte enfichable ou un mode de facturation et les moyens pour préparer et activer une autre carte enfichable ou un autre mode de facturation étant intégrés dans la commande (100) du terminal de téléphonie mobile (1000).

16. Appareil de télécommunications selon la revendication 12 et 15, **caractérisé en ce qu'**en outre les moyens destinés à contrôler au moins un paramètre et les moyens destinés à générer un signal de commande sont intégrés dans la commande (100) du terminal de téléphonie mobile (1000).
